# EUROPÄISCHE PATENTSCHRIFT

(11) **EP 3 357 617 B1**
(45) Veröffentlichungstag und Bekanntmachung des Hinweises auf die Patenterteilung: **23.02.2022**
(21) Anmeldenummer: 17154122.0
(22) Anmeldetag: 01.02.2017
(51) Int. Cl.: B23C 3/12, B23P 23/02, B23Q 1/48, B27C 9/04, B27M 1/08, B27M 3/00

(54) **PROFILBEARBEITUNGSVORRICHTUNG, PROFILBEARBEITUNGSSTRECKE UND VERFAHREN**
PROFILE PROCESSING DEVICE, PROFILE PROCESSING LINE, AND PROCESS
DISPOSITIF D'USINAGE DE PROFILÉ, LIGNE D'USINAGE DE PROFILÉ ET PROCÉDÉ

(43) Veröffentlichungstag der Anmeldung: 08.08.2018
(73) Patentinhaber: F. M. ROTOX Sp. z. o.o., 46-034 Pokoj (PL)
(72) Erfinder: Franczok, Krzysztof, 45-590 Opole (PL); Krawczyk, Marek, 45-758 Opole (PL); Pieruszka, Piotr, 46-053 Debska Kuznia (PL); Sonka, Jan, 46-034 Dabrówka Dolna (PL)
(74) Vertreter: Müller, Eckhard

(56) Entgegenhaltungen:
- EP-A1- 2 366 480
- EP-A1- 2 460 618
- AT-B- 404 571
- DE-A1- 3 817 005
- DE-A1- 4 406 381
- DE-A1-102006 007 171
- US-A- 6 006 408
- US-A1- 2015 063 936

## Beschreibung

Die vorliegende Erfindung betrifft eine Vorrichtung zur maschinellen Bearbeitung von langgestreckten Werkstücken, in Form von aus Profilstäben zusammengesetzten Fenster- oder Türrahmen bzw. -Flügeln oder Blendrahmen nach dem Oberbegriff des Anspruchs 1, eine Profilbearbeitungsstrecke nach dem Oberbegriff des Anspruchs 11 sowie ein Verfahren zur Maschinellen Bearbeitung eines vorstehend genannten Werkstücks gemäß dem Oberbegriff des Anspruchs 12. Eine solche Vorrichtung und Profilbearbeitungsstrecke sowie ein solches Verfahren sind aus der EP 2 366 480 A1 bekannt.

Derartige Vorrichtungen können im Rahmen der Erfindung besonders zum Einbringen von Bohrungen und/oder Fräsungen und/oder Befestigungsmitteln in ein Werkstück vorgesehen werden, etwa zum Herstellen von Entwässerungsschlitzen, Entlüftungsschlitzen, Ventilationsschlitzen, Schlosskästen und Olivenbohrungen Scharnierverschraubungen, Kämpferverschraubungen Fenster- und Türrahmen.

Das Werkstück in Form eines solchen Rahmens kann aus Profilstäben bestehen, insbesondere aus einem thermoplastischen Kunststoff wie etwa PVC. Die Enden der Profilstäbe werden in ihrem Verbindungsbereich gewöhnlich auf Gehrung geschnitten. In einer Fügemaschine werden diese dann zum Verschweißen in ihrem Verbindungsbereich erhitzt, bis sie plastisch verformbar sind. Dann werden die Profilstücke gegeneinander gepresst und somit eine stoffschlüssige Verbindung zwischen diesen hergestellt. Die nach dem Zusammenpressen der Profilstücke im Verbindungsbereich entstehende stoffschlüssige Verschweißung muss nachfolgend abkühlen, bevor der so gefügte Rahmen größeren mechanischen Belastungen ausgesetzt werden kann. Durch das Aufeinanderpressen während des Fügeprozesses entsteht im Bereich der Eckverbindungen des Rahmens gewöhnlich eine Schweißraupe aus dem verdrängten Kunststoff, die nach dem Erkalten mit Hilfe einer Nachbearbeitungsmaschine, beispielsweise einer Eckenverputzmaschine entfernt werden müssen. Um diese Zeit für das Abkühlen der Schweißverbindungen effizienter nutzen zu können, kann eine maschinelle Bearbeitung bereits während der Abkühlphase erfolgen.

### Stand der Technik

Neben der EP 2 366 480 A1 ist aus der EP 2 366 479 A1 eine weitere Bearbeitungsvorrichtung bekannt. Die in einer vorgelagerten Schweißvorrichtung aus vier Profilstäben hergestellten rechteckigen Rahmen werden von einem Fördermittel in einer Transportrichtung in die Bearbeitungsvorrichtung befördert und dort für die anschließende Bearbeitung durch Greifmittel festgelegt. Zwei seitlich an dem Rahmen verfahrende Bearbeitungsköpfe bearbeiten die beiden Profilstäbe, die längs der Transportrichtung ausgerichtet sind. Sodann wird der teilweise bearbeitete Rahmen mittels einer Rotationseinrichtung um 90 Grad dreht, so dass er in einer zweiten, nachgelagerten Bearbeitungsvorrichtung auch an den beiden noch unbearbeiteten Profilstäben bearbeitet werden kann.

Nachteilig an einer solchen Vorrichtung ist, dass die quer zur Transportrichtung liegenden Profilstäbe durch die Bearbeitungsköpfe nicht bearbeitet werden können. Hierzu können gegebenenfalls zusätzliche, quer zur Transportrichtung verfahrbare Bearbeitungsköpfe vorgesehen werden, durch welche jedoch die Komplexität und die Kosten einer solchen Bearbeitungsvorrichtung steigen.

Aus der DE 10 2013 112 814 A1 ist ein Eckenputzautomat mit einer Bearbeitungseinheit bekannt, welche ein um eine Hochachse frei schwenk- bzw. drehbares Werkzeug aufweist. Das Werkzeug weist Tastflanken auf und wird durch das Anlegen der Tastflanken an die Ecke des Rahmens mit dem Rahmen ausgerichtet und in dieser Position arretiert, so dass die Entfernung der Schweißraupe besonders genau erfolgen kann. Hierbei wird das Werkzeug mechanisch an dem zu bearbeitenden Rahmen ausgerichtet.

Aus der US 2015/0063936 A1 ist ein Fensterverarbeitungssystem zur Verwendung bei der Herstellung von Fensterrahmen bekannt. Das System umfasst einen ortsfest montierten Industrieroboter mit einem Gelenkarm, der eine Vielzahl von Gliedern aufweist, die eine rotatorische Bewegung um mehrere Achsen ermöglichen. Das System umfasst ferner einen drehbaren Werkzeughalter am Ende des Gelenksarms für eine Vielzahl von Werkzeugen zum Ausführen von Reinigungsvorgängen an einem Fensterrahmen. Der zu bearbeitende Fensterrahmen ist auf einem drehbaren Werkstückhalter angeordnet, mittels welchem die zu bearbeitende Bearbeitungsstelle des Fensterrahmens dem Roboterarm zugewandt wird.

Aus den Druckschriften DE 10 2006 007 171 A1, US 6,006,408 A, DE 44 06 381 A1, AT 404 571 B, EP 2 460 618 A1 und DE 38 17 005 A1 sind weitere Bearbeitungsmaschinen für Kunststoffprofilstärke bzw. Profilrahmen bekannt.

Vor diesem Hintergrund liegt der Erfindung die Aufgabe zugrunde, eine verbesserte Vorrichtung und ein verbessertes Verfahren der eingangs genannten Art anzugeben, mit der sich ein Werkstück deutlich effizienter und flexibler bearbeiten lässt.

Die Aufgabe wird durch eine Vorrichtung nach dem Anspruch 1, mit einer Profilbearbeitungsstrecke nach dem Anspruch 11 sowie mit einem Verfahren nach dem Anspruch 12 gelöst.

Danach wird eine Vorrichtung, nämlich eine Profilbearbeitungsmaschine zur maschinellen Bearbeitung von langgestreckten Werkstücken vorgesehen. Die Werkstücke sind aus Profilstäben zusammengesetzte Fenster- oder Türrahmen bzw. -flügel oder Blendrahmen. Das zu bearbeitende Werkstück ist auf einer Werkstückauflage anordenbar. Das Werkstück sowie ein Bearbeitungskopf der Vorrichtung sind in einer Verfahrrichtung entlang der Werkstückauflage relativ zueinander verfahrbar, wobei eine Bearbeitungseinheit mit wenigstens einem daran gehaltenen Bearbeitungswerkzeug zum Bearbeiten des Werkstücks an dem Bearbeitungskopf angeordnet ist.

Gemäß der Erfindung ist es vorgesehen, dass die Bearbeitungseinheit in der Positionierebene entlang wenigstens einer Drehachse translatorisch verfahrbar ausgebildet ist. Dadurch, dass die Drehachse, um die die Bearbeitungseinheit dreh- oder schwenkbar ist und die Positionierrichtung, in der die Bearbeitungseinheit translatorisch verfahrbar ist, zusammenfallen oder parallel zueinander sind, wird ein vereinfachter Bewegungsablauf und somit eine vereinfachte Programmierung der Vorrichtung möglich.

Bei der erfindungsgemäßen Vorrichtung ist es vorgesehen, dass der Bearbeitungskopf und das Werkstück während der Werkstückbearbeitung relativ zueinander verfahrbar sind. Auf diese Weise werden eine genauere und effizientere Bearbeitung des Werkstücks sowie durchgängige Bearbeitungsoperationen möglich, so dass beispielsweise Längsschlitze in Verfahrrichtung in einer durchgängigen Bewegung gefräst werden können, die sich über einen beträchtlichen Teil der Länge des Werkstückes erstrecken.

An dem Bearbeitungskopf ist wenigstens eine Vorrichtung zum Festlegen des Werkstücks in wenigstens einer Raumrichtung angeordnet. Hierzu ist eine mitfahrende Spannrollenvorrichtung zum Abstützen des Werkstücks während der Werkstückbearbeitung vorgesehen, so dass die Erfindung für eine schnellere Bearbeitung des gesamten Werkstücks noch flexibler einsetzbar ist.

Die Bearbeitungseinheit ist erfindungsgemäß in einer quer oder senkrecht zur Verfahrrichtung verlaufenden Positionierebene bewegbar und bezogen auf den Bearbeitungskopf um wenigstens eine quer oder senkrecht zur Verfahrrichtung verlaufende Drehachse mittels eines Antriebs drehbar und/oder schwenkbar. Durch eine solche Ausgestaltung der Vorrichtung wird es möglich, neben den in Verfahrrichtung ausgerichteten Abschnitten auch quer oder senkrecht zur Verfahrrichtung verlaufenden Abschnitte eines Rahmens bzw. eines Werkstückes durch denselben Bearbeitungskopf zu bearbeiten. Dies ist insbesondere in Eckbereichen von Vorteil, wo etwa das Fräsen von Entwässerungsschlitzen an einem Querprofil möglich wird.

Bevorzugt kann vorgesehen sein, dass die Bearbeitungseinheit, bezogen auf den Bearbeitungskopf, drehbar oder schwenkbar um wenigstens zwei quer oder senkrecht zur Verfahrrichtung und quer oder senkrecht zueinander verlaufende Drehachsen ausgebildet ist. Dadurch kann die Bearbeitung sowohl von sich längsals auch quer oder senkrecht zur Verfahrrichtung verlaufenden Abschnitten des Werkstückes erreicht werden. Außerdem kann dadurch ermöglicht werden, ein Werkstück auf der dem Bearbeitungskopf zugewandten Seite zu bearbeiten. Beispielsweise kann hierdurch sowohl die Innenseite als auch die Außenseite eines Profilrahmens bearbeitet werden. Es kann hierdurch sogar möglich werden, auch einen dem Bearbeitungskopf gegenüberliegenden Profilstab zu bearbeiten, so dass alle Profilstäbe eines Rahmens durch dieselbe Bearbeitungseinheit bearbeitet werden können.

In Weiterbildung dieser Ausgestaltung kann zudem vorgesehen sein, dass die Bearbeitungseinheit in der Positionierebene entlang beider Drehachsen translatorisch verfahrbar ausgebildet ist. Dies ermöglicht einen noch weiter vereinfachten Bewegungsablauf und somit eine vereinfachte Programmierung der Vorrichtung.

In einer Ausgestaltung der Erfindung kann vorgesehen sein, dass wenigstens ein positionsgeregelter Stellantrieb, insbesondere ein Servoantrieb zum Drehen der Bearbeitungseinheit um die wenigstens eine Drehachse und/oder zum Verschieben der Bearbeitungseinheit entlang wenigstens einer der Drehachsen vorgesehen ist. Hierdurch wird eine besonders genaue Positionierbarkeit der Bearbeitungseinheit möglich. Zudem kann dadurch in bestimmten Fällen ermöglicht werden, die Bearbeitungseinheit während der Bearbeitung des Werkstücks zu bewegen, so dass auch aufwändigere Bearbeitungsoperationen durchgeführt werden können, beispielsweise werden kompliziertere Schlitzformen fräsbar.

Bevorzugt kann bei der Vorrichtung vorgesehen sein, dass die wenigstens eine Drehachse etwa parallel zu einer Werkstückauflageebene der Werkstückauflage ausgerichtet ist. In dieser Weise werden die Freiheitsgrade, in welchen die Bearbeitungseinheit dreh- oder schwenkbar ist, an einem bereits für die Vorrichtung existierenden Koordinatensystem ausgerichtet, wodurch sich ein vereinfachter Bewegungsablauf ergibt. Dies vereinfacht die Programmierung sowie die Montage und Einrichtung der Vorrichtung.

Zusätzlich oder alternativ kann vorgesehen sein, dass die wenigstens eine Drehachse etwa senkrecht zu einer Werkstückauflageebene der Werkstückauflage ausgerichtet ist. Auf diese Weise erfolgt eine Bewegung der Bearbeitungseinheit, die an dem ohnehin für die Vorrichtung definierten Koordinatensystem ausgerichtet ist, so dass sich der Bewegungsablauf der Vorrichtung vereinfacht und dessen Programmierung sich weniger komplex gestaltet.

Es kann zudem vorgesehen sein, dass die Bearbeitungseinheit unter einem sich von einer Werkstückauflageebene der Werkstückauflage erhebenden Bearbeitungswinkel α von etwa 10° bis etwa 70° und/oder, vorzugsweise 0° bis etwa 90° ausrichtbar, insbesondere unter einem beliebigen Winkel zwischen 0° bis 360° ausrichtbar ist. Auf diese Weise wird die Herstellung von Entwässerungsschlitzen in unterschiedlichen Ausrichtung möglich. Bei einer Ausrichtbarkeit von 0° bis 90° Grad wird zudem die Bearbeitung der zur Werkstückauflageebene senkrecht verlaufenden Seitenflächen eines Werkstücks besser möglich. Beispielsweise kann es so möglich werden, Bohrungen für ein Scherenlager an der Außenseite eines Fensterflügels zu setzen.

In Weiterbildung dieses Gedankens kann die Bearbeitungseinheit zusätzlich um eine als Hochachse der Gesamtvorrichtung ausgebildete Drehachse drehbar sein, so dass eine Bearbeitung der dem Bearbeitungskopf zugewandten Seite des Werkstücks oder auch eines gegenüberliegenden Werkstückabschnittes besser möglich wird.

In einer besonderen Ausgestaltung der Erfindung kann die Bearbeitungseinheit wenigstens zwei sich vorzugsweise diametral gegenüberliegende Bearbeitungswerkzeuge aufweisen, die durch Drehen der Bearbeitungseinheit um die wenigstens eine Drehachse wechselweise auf eine Bearbeitungsstelle des Werkstückes ausrichtbar sind. Auf diese Weise können mehrere Werkzeuge gleichzeitig an einer einzigen Bearbeitungseinheit vorgesehen werden. Vorzugsweise können diese Werkzeuge sogar von demselben Antrieb betätigt werden. Auf diese Weise sind Einsparungen durch den Wegfall von Werkzeugwechseln und separaten Werkzeugantrieben möglich.

Ergänzend kann die erfindungsgemäße Vorrichtung an ihrem Bearbeitungskopf wenigstens eine weitere, von der Bearbeitungseinheit unabhängige Einheit zum Bearbeiten und/oder Ausrichten und/oder Einspannen des Werkstücks aufweisen. Als zusätzliche Einheiten sind hier insbesondere Vorschubschrauber und/oder Bohrköpfe und/oder Schlitzfräsen und/oder Anschläge und/oder Spannbackenvorrichtungen und/oder Spannrollenvorrichtungen denkbar, um eine schnellere und flexiblere Bearbeitung des Werkstücks zu ermöglichen.

Im Rahmen der Erfindung liegt auch eine Profilbearbeitungsstrecke mit einer vorstehend beschriebenen Vorrichtung, wie dies in Anspruch 11 beschrieben ist. Hierbei kann vorgesehen sein, dass die Vorrichtung zusätzlich als eine Kühlstation ausgebildet ist, die einer Schweißvorrichtung zur Herstellung des Werkstücks nachgelagert und/oder einer Nachbearbeitungsvorrichtung, insbesondere einer Eckenputzvorrichtung vorgelagert ist, so dass eine effiziente Herstellung des Werkstück möglich wird.

Im Rahmen der Erfindung liegt gemäß Anspruch 12 auch ein Verfahren zur Bearbeitung von langgestreckten Werkstücken, insbesondere von Profilstäben oder 7 aus Profilstäben zusammengesetzten Fenster- oder Türrahmen bzw. -flügeln oder

Blendrahmen, das mit einer vorstehend beschriebenen Vorrichtung, insbesondere mittels einer vorstehend beschriebenen Profilbearbeitungsstrecke ausgeführt wird. Es zeichnet sich besonders dadurch aus, dass sowohl ein Befestigen eines zusätzlichen Werkstückelementes, insbesondere eines Kämpfers, als auch sein maschinelles Bearbeiten vorzugweise in einem Durchlauf erfolgen. Auf diese Weise kann der Umfang einer manuellen Nachbearbeitung erheblich reduziert werden, wodurch die Fertigungszeit verkürzt wird.

Vorzugsweise kann bei dem Verfahren vorgesehen sein, dass das zusätzliche Werkstückelement, beispielsweise ein Kämpfer, vor dem Befestigen an dem Werkstück an diesem ausgerichtet wird. Hierdurch lässt dich die Fertigungsgenauigkeit erheblich steigern.

Ferner kann vorgesehen sein, nach dem Ausrichten zunächst eine maschinelle Bearbeitung einer Befestigungsstelle durchzuführen, insbesondere das Setzen einer Bohrung für Kämpferverschraubung. Danach kann ein Befestigungsmittel, insbesondere zur Herstellung der Kämpferverschraubung in die Bohrung getrieben werden. Der Bearbeitungsprozess lässt sich somit weiter vereinfachen, da die Bearbeitungsschritte ohne Veränderung der Position des Rahmens auf der Werkstückauflage erfolgen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Fig. 1: eine zum Teil schematische Draufsicht auf eine Profilbearbeitungsstrecke mit einer erfindungsgemäßen Vorrichtung,
- Fig. 2: eine schematische Drauf- und Seitenansicht eines Werkstücks,
- Fig. 3: eine perspektivische Ansicht auf eine erfindungsgemäße Vorrichtung,
- Fig. 4: ein Ausschnitt aus einer Seitenansicht der erfindungsgemäßen Vorrichtung mit einem Bearbeitungskopf,
- Fig. 5: eine vergrößerte Seitenansicht einer Spannbackenvorrichtung der erfindungsgemäßen Vorrichtung,
- Fig. 6: ein perspektivischer Ausschnitt der erfindungsgemäßen Vorrichtung mit einem Bearbeitungskopf gemäß einer ersten Variante,
- Fig. 7: ein Werkzeughalter mit einer Bearbeitungseinheit an dem Bearbeitungskopf gemäß Figur 6,
- Fig. 8: ein Ausschnitt aus einer Draufsicht auf eine erfindungsgemäße Bearbeitungseinheit gemäß Figur 6 und 7,
- Fig. 9: eine perspektivische Ansicht auf einen Bearbeitungskopf gemäß einer zweiten Variante der Erfindung,
- Fig. 10: eine perspektivische Ansicht auf einen Werkzeughalter mit einem Bearbeitungskopf gemäß Figur 9,
- Fig. 11: eine Draufsicht auf eine Bearbeitungseinheit gemäß Figur 9 und 10,
- Fig. 12: eine Draufsicht auf einen Ausschnitt der erfindungsgemäßen Vorrichtung gemäß der zweiten Variante bei der Bearbeitung eines Werkstücks,
- Fig. 13: eine Draufsicht auf die erfindungsgemäße Vorrichtung mit zwei Bearbeitungsköpfen bei der Bearbeitung eines Werkstücks,
- Fig. 14: einen Ausschnitt der erfindungsgemäßen Vorrichtung mit einem zusätzliche Einheiten aufweisenden Bearbeitungskopf und
- Fig. 15: eine schematische Draufsicht auf ein mit dem erfindungsgemäßen Verfahren bearbeitetes Werkstück.

Die Figuren zeigen die Erfindung zum Teil schematisch. Zum besseren Verständnis der Erfindung sind in einigen Ansichten teilweise Merkmale ausgeblendet, um andere Merkmale erkennbar zu machen.

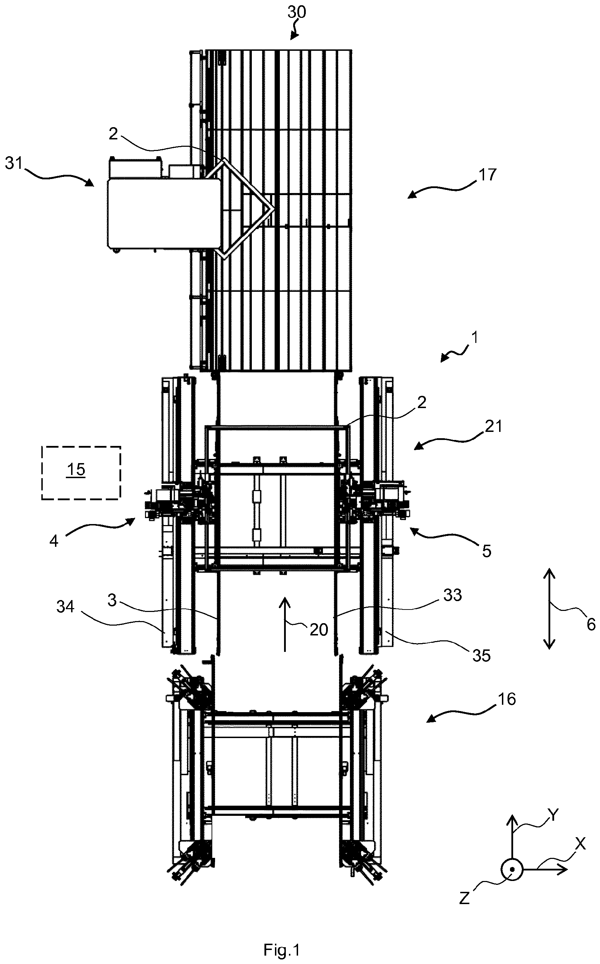

Die Figur 1 zeigt eine schematische Draufsicht auf eine erfindungsgemäße Vorrichtung 1, die als Kühlstation 21 Teil einer Profilbearbeitungsstrecke 30 zur Herstellung von Fenster- oder Türrahmen bzw. -flügeln

ist. Dabei ist die Vorrichtung 1 einer Fügemaschine 16 nachgelagert, in welcher vier Profilstäbe A, B, C, D zu einem Rahmen bzw. Werkstück 2 gefügt werden und dann mittels als Transportvorrichtungen ausgebildeten Werkstückauflagen 3, 33 in die erfindungsgemäße Vorrichtung 1 transportiert wird. Denkbar ist jedoch auch, dass die Vorrichtung 1 freistehend betrieben wird und die Werkstücke manuell auf die Werkstückauflagen 3, 33 aufgelegt werden.

Für die Vorrichtung 1 bzw. die Profilbearbeitungsstrecke 30 ist ein Koordinatensystem mit den Raumrichtungen X, Y, und Z definiert.

Die Fügemaschine 16 bzw. Vorrichtung zum Fügen der Profilstäbe ist im vorliegenden Fall als Schweißmaschine ausgebildet. Im vorliegenden Beispiel kann die für das Abkühlen der Schweißverbindungen erforderliche Zeit genutzt werden, um das Werkstück zu bearbeiten. Dazu wird die Vorrichtung 1 der Fügemaschine 16 nachgeschaltet. Die Vorrichtungen weist die beiden Bearbeitungsköpfe 4, 5 auf, welche seitlich zu dem Werkstück 2 in einer Verfahrrichtung 6 entlangfahren und dabei Bearbeitungsoperationen an dem Werkstück 2 vornehmen können.

Beim vorliegenden Beispiel entspricht die Verfahrrichtung 6 einer Transportrichtung 20, die durch die als Transporteinrichtungen, hier als Förderbänder vorgesehenen Werkstückauflagen 3, 33 vorgegeben ist.

Die beiden Bearbeitungsköpfe 4, 5 sind auf Fahrschienen 34, 35 in der Verfahrrichtung 6 geführt. Die Werkstückauflagen 3, 33 definieren eine Werkstückauflageebene 15, die in der Figur 1 der Blattebene entspricht und sich in den ebenfalls in der Figur 1 gezeigten Raumrichtungen X und Y erstreckt. Die dritte Raumrichtung Z erstreckt sich senkrecht zur Blattebene und zeigt auf den Betrachter.

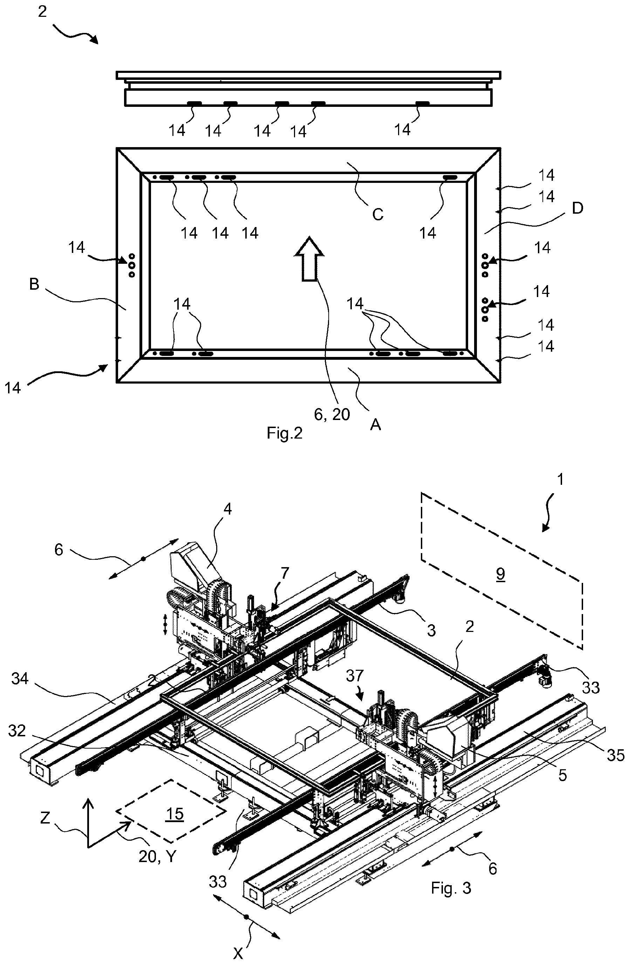

Die Figur 2 zeigt schematisch ein Beispiel für ein Werkstück 2 mit diversen Bearbeitungsstellen 14. Diese Bearbeitungsstellen 14 können

Entwässerungsschlitze, Entlüftungsschlitze, Ventilationsschlitze, Scharnierverschraubungen, Kämpferverschraubungen, Schlosskästen oder Olivenbohrungen sein.

Die Vorrichtung 1 gemäß der Erfindung ermöglicht es, das Werkstück an einer Vielzahl unterschiedlicher Bearbeitungsstellen 14 mit unterschiedlichen Bearbeitungsoperationen zu bearbeiten.

In der Figur 2 ist erkennbar, dass das Werkstück aus vier Profilstäben A, B, C, D besteht, wobei die Profilstäbe B und D längs und die Profilstäbe A und C quer zur Verfahrrichtung 6 der Bearbeitungsköpfe 4, 5 beziehungsweise der Transportrichtung 20 des Werkstücks 2 ausgerichtet sind. Die auf den Profilstäben A und C eingezeichneten Bearbeitungsstellen 14 können insbesondere Entlüftungs- bzw. Entwässerungsschlitze sein.

Bei Vorrichtungen nach dem Stand der Technik konnten derartige Bearbeitungsstellen 14 nur dann in den Rahmen eingebracht werden, wenn die Profilstäbe A und C längs zur Verfahrrichtung 6 ausgerichtet waren. Die Bearbeitungsstellen auf den Profilstäben B und C können insbesondere Olivenbohrungen oder Scharnierverschraubungen sein. Es können somit nicht mehr nur parallel zur Transportrichtung ausgerichtete Profilstäbe und das angrenzende Profil bearbeitet werden, sondern auch in Querrichtung verlaufende Abschnitte des Werkstücks 2.

Die Figur 3 zeigt die erfindungsgemäße Vorrichtung 1 mit den beiden Bearbeitungsköpfen 4, 5, die entlang der Fahrschienen 34, 35 in der Verfahrrichtung 6 bzw. der Transportrichtung 20 entlang des Werkstücks 2 verfahrbar sind. An den Bearbeitungsköpfen 4, 5 ist jeweils eine Bearbeitungseinheit 7, 37 zur Bearbeitung des Werkstücks 2 vorgesehen. Die Bearbeitungseinheiten 7 ,37 können in der senkrecht zur Werkstückauflageebene 15 verlaufenden Positionierebene 9 verfahren werden. Dabei bewegen sich die Bearbeitungseinheiten 7 ,37 relativ bezüglich des jeweiligen Bearbeitungskopfes 4, 5. Diese Bewegung erfolgt im vorliegenden Beispiel in Positionierrichtungen 39, 40, die hier mit den Raumrichtungen X und Z übereinstimmen. Es ist jedoch denkbar, dass die Positionierrichtungen 39, 40 nicht mit den Raumrichtungen X und Z übereinstimmen.

Die Fahrschiene 35 kann zur Anpassung an unterschiedlich breite Werkstücke 2 in der Raumrichtung X, also entlang der Positionierebene 9 verschoben werden. Zusammen mit der Fahrschiene 35 wird dabei auch die Werkstückauflage 33 mitverschoben.

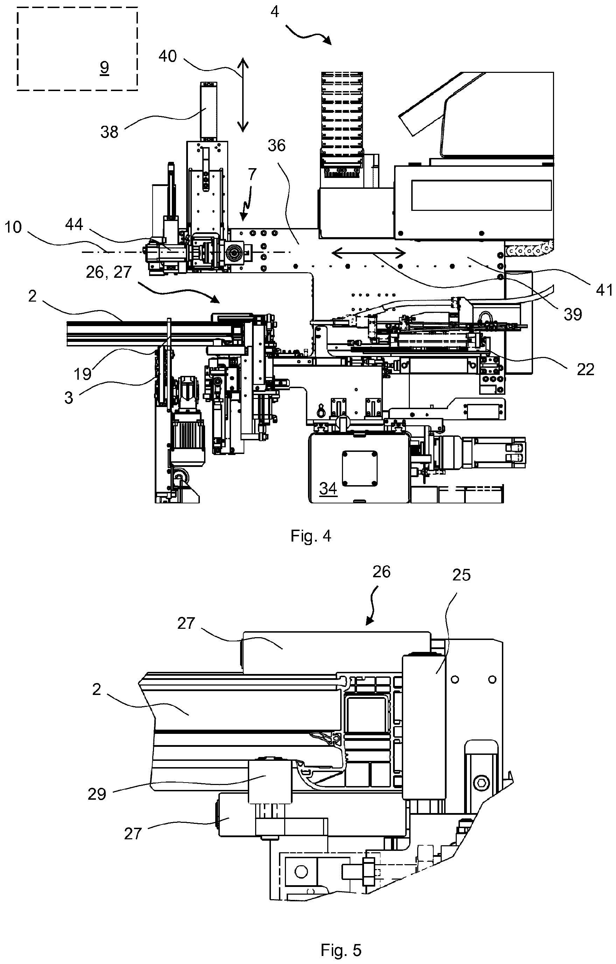

Die Figur 4 zeigt eine vergrößerte Seitenansicht des Bearbeitungskopfes 4, welcher eine erste Variante der Erfindung verwirklicht. Dabei ist die Bearbeitungseinheit 7 in der Positionierebene 9 in den Positionierrichtungen 39, 40 verfahrbar. Dazu ist die Bearbeitungseinheit 7 an einem Werkzeughalter 36 angeordnet, der mittels einer CNC-Achseneinheit 41 angetrieben ist und so eine Verschiebbarkeit in der Positionierrichtung 39 und mit der CNC-Achseneinheit 38 angetrieben ist und so eine Verschiebbarkeit in der Positionierrichtung 40 ermöglicht. Die Bearbeitungseinheit 7 ist um eine Drehachse 10 verdrehbar an dem Werkzeughalter 36 gehalten. Zum Verdrehen der Bearbeitungseinheit 7 um die Drehachse 10 ist ein Drehachsenantrieb 44 vorgesehen, der vorzugsweise positionsgeregelt ist. Besonders gut eignet sich hierfür Servoantriebe oder auch Schrittmotorantriebe.

Um das Werkstück 2 bzw. den Rahmen während der Bearbeitung gegenüber dem Bearbeitungskopf 4 festzulegen, ist eine Spannbackenvorrichtung 26 bzw. Spannrollenvorrichtung 27 zum Halten des Werkstücks 2 vorgesehen, die anhand der Figur 5 näher erläutert wird.

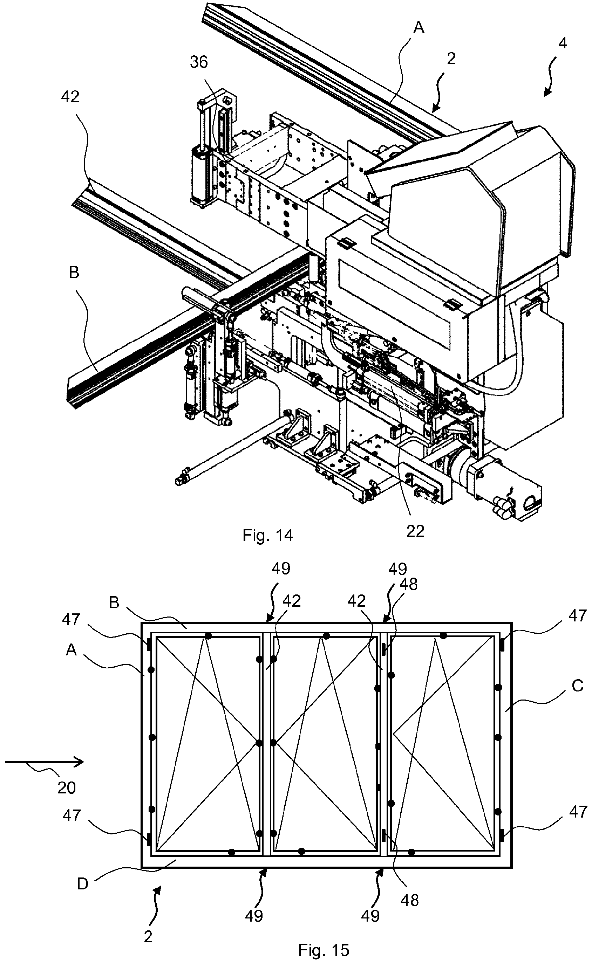

Da der Bearbeitungskopf 4 entlang der Verfahrrichtung 6 während der Bearbeitung des Werkstücks 2 verfahren werden kann, ist an der Werkstückauflage 3 ein Spannhaken 19 zum Festlegen des Werkstücks 2 in der Verfahrrichtung 6 vorgesehen. In der Figur 4 ist ferner ein Vorschubschrauber 22 erkennbar, der anhand der Figur 14 näher erläutert wird.

Die Figur 5 zeigt eine Spannbackenvorrichtung 26, die das Werkstück 2 bezogen auf den jeweiligen Bearbeitungskopf 4, 5 in der Positionierebene 9 festlegt. Dazu sind mehrere Spannrollen vorgesehen, welche seitlich an dem Werkstück 2 angreifen können, wobei hier zwei Spannbacken in Form der Spannrollenvorrichtung 27 vorgesehen sind, welche das Werkstück 2 in der

Raumrichtung Z bzw. der Positionierrichtung 40 festlegen. Zusätzlich kann die Spannrolle 25 als seitlicher Anschlag an das Werkstück 2 herangefahren werden. Bedarfsweise kann zusätzlich eine weitere Spannrolle in Form des Gegenanschlags 29 als Gegenstück zum Anschlag 25 dienen.

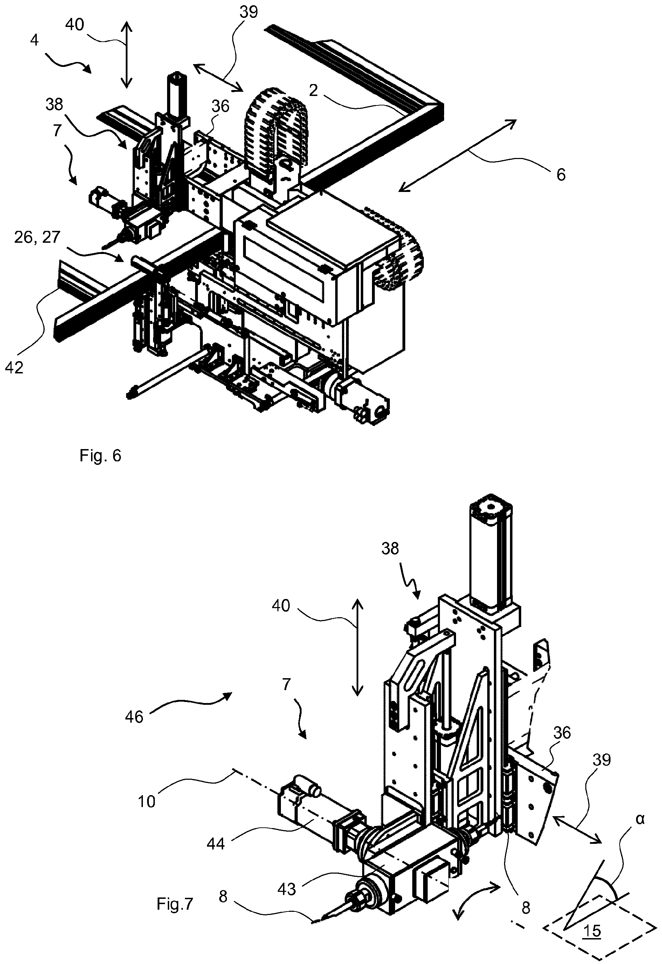

Die Figur 6 zeigt den Bearbeitungskopf 4 bei der Bearbeitung des Werkstücks 2, wobei die Spannbackenvorrichtung bzw. Spannrollenvorrichtung 26, 27 das Werkstück 2 halten. Ferner ist ein quer zur Verfahrrichtung 6 verlaufender Kämpfer 42 des Werkstücks 2 bzw. des Rahmens angedeutet. Beim Passieren des Kämpfers 42 muss dann entsprechend die Spannrolle bzw. Gegenanschlag 29 auf der Innenseite des Werkstücks 2 eingefahren werden, um eine Kollision zwischen dem Gegenanschlag 29 und dem Kämpfer 42 zu vermeiden.

Figur 7 zeigt eine detailliertere Ansicht der Bearbeitungseinheit 7, die an dem Werkzeughalter 36 befestigt ist. Bezogen auf die Werkstückauflageebne 15 kann die Bearbeitungseinheit 7 mit ihrem Werkzeugantrieb 43 durch den Drehachsantrieb 44 so verdreht werden, dass sich ein an dem Werkzeugantrieb 43 angeordnetes Werkzeug 8 unter einem Winkel α ausrichten lässt. Im einfachsten Fall sollte dieser Winkel wenigstens 10° bis 70° und 100° bis 170° betragen, um das Fräsen von Entwässerungsschlitzen an dem Werkstück 2 zu ermöglichen. Bevorzugt kann die Bearbeitungseinheit 7 jedoch in einem beliebigen Winkel positioniert werden. Der Werkzeugantrieb 43 trägt zwei gegenüberliegende Bearbeitungswerkzeuge 8, die von demselben Antrieb betrieben werden, und durch Verdrehen um die Drehachse 10 wahlweise bzw. wechselweise auf das Werkstück 2 gerichtet werden können.

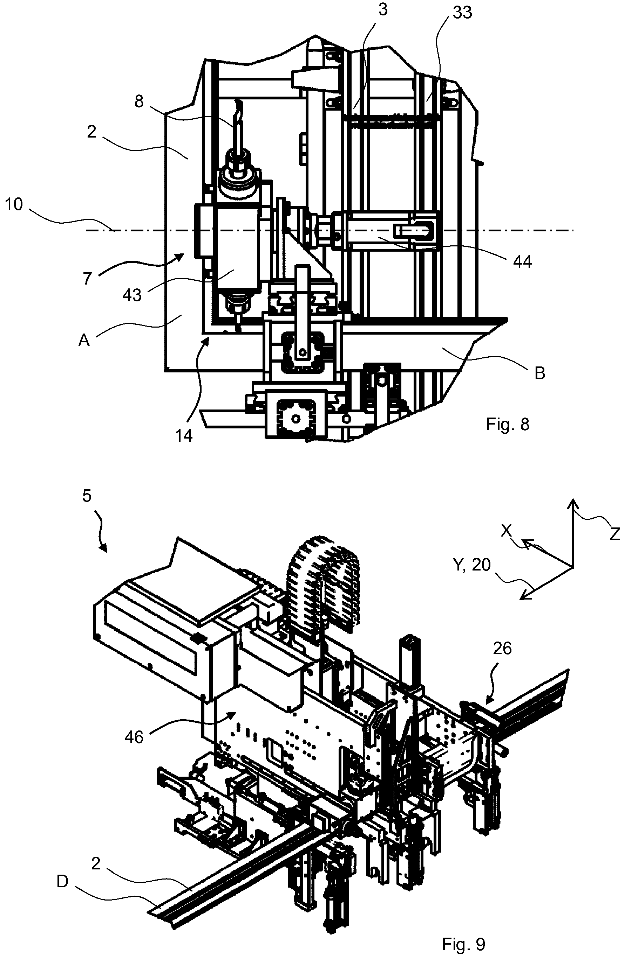

Dies insbesondere in Figur 8 erkennbar, wobei das Werkstück 2 an einer Bearbeitungsstelle 14 mit einem der beiden Bearbeitungswerkzeuge 8 bearbeitet wird. Das jeweils nicht im Einsatz befindliche Bearbeitungswerkzeug 8 zeigt von dem Werkstück 2 weg. Wenn es beispielsweise erforderlich ist, an der Bearbeitungsstelle 14 an dem Profilstab B zwei Bohrungen mit unterschiedlichen Durchmessern einzubringen, so könnte nach dem Setzen der ersten Bohrung die Bearbeitungseinheit 7 einfach um 180° geschwenkt werden, so dass dann das zweite Bearbeitungswerkzeug 8 zu dem Werkstück ausgerichtet ist.

Die Figur 9 zeigt eine zweite Variante der Erfindung in Form des Bearbeitungskopfes 5, der eine Bearbeitungseinheit 37 aufweist. Diese ist nicht nur um die Drehachse 10 drehbar, sondern auch um eine in Raumrichtung Z verlaufende Hochachse drehbar bzw. schwenkbar, wobei beide Achsen an dem Werkzeughalter 46 angeordnet sind.

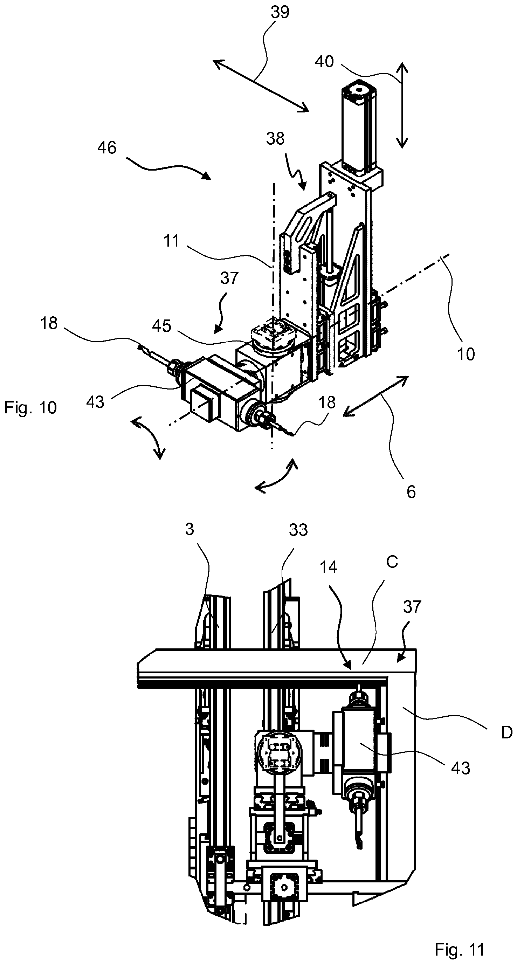

Die Figur 10 zeigt die als Hochachse ausgebildete Dreh- bzw. Schwenkachse 11, die ihrerseits entlang der Positionierrichtung 40, also in der Raumrichtung Z verschwenkbar ist. Dadurch können die Bearbeitungswerkzeuge 18 in nahezu beliebiger Orientierung zum dem Werkstück 2 angeordnet werden.

Die in der Figur 10 gezeigte Variante der Bearbeitungseinheit 37 unterscheidet sich von der zuvor beschriebenen Bearbeitungseinheit 7 an dem Bearbeitungskopf 4 lediglich darin, dass ein zusätzlicher Schwenkachsenantrieb 45 zwischen dem Werkzeughalter 46 und der Bearbeitungseinheit 37 angebracht wird, der zusätzlich ein Verschwenken der Bearbeitungseinheit 37 um die Schwenkachse 11 ermöglicht.

Die Figur 11 zeigt diese Bearbeitungseinheit 37 bei der Bearbeitung eines Werkstücks 2 an dem Profilstab C. Es ist leicht erkennbar, dass dieselbe Bearbeitungseinheit 37 durch einfaches Verschwenken um die Schwenkachse 11 mit ihrem Bearbeitungswerkzeug 18 dann auch auf den Profilstab D ausgerichtet werden kann. Die Verschwenkbarkeit um die Schwenkachse 11 sollte vorzugsweise 90° betragen. Der Schwenkachsenantrieb 45 ist ebenso wie der Drehachsenantrieb 44 positionsgeregelt und kann beispielsweise als Servoantrieb oder aber als Schrittmotorantrieb ausgebildet sein.

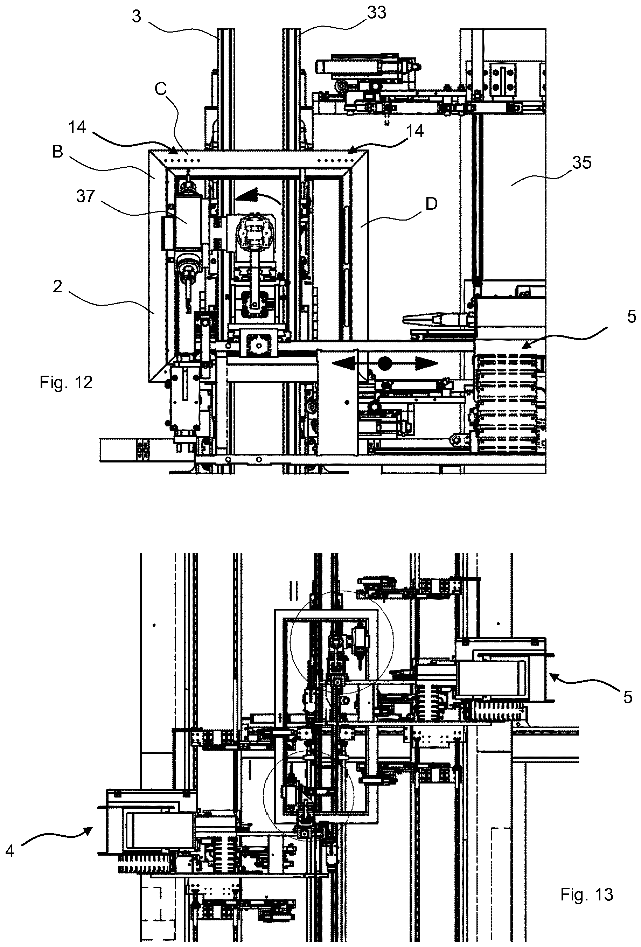

Die Figur 12 verdeutlicht den besonderen Vorteil der erfindungsgemäßen Vorrichtung 1, der besonders kleinen Werkstücken 2 zum Tragen kommt, bei denen die Bearbeitungseinheit 37 bzw. Bearbeitungseinheit 7 nicht allen Bereichen des Werkstücks 2 zugänglich ist. Hierbei kann die Bearbeitungseinheit 37 das Werkstück 2, also den Rahmen auch auf dessen entfernter Seite bearbeiten. So kann gemäß der Figur 12 die Bearbeitungseinheit 5 eine Bearbeitungsstelle 14 in der Nähe des Profilstabs B bearbeiten. Dies kann gerade auch dann von Vorteil sein, wenn gemäß Figur 13 beide Bearbeitungsköpfe 4, 5 an unterschiedlichen Stellen des Werkstücks 2 in der Verfahrrichtung 6 Bearbeitungsoperationen vornehmen, sich aber auf Grund der geringen Werkstückbreite nicht begegnen bzw. kollidieren dürfen.

Figur 13 zeigt, wie beide Bearbeitungsköpfe 4, 5 gleichzeitig dasselbe Werkstück 2 bearbeiten.

Die Figur 14 zeigt den Bearbeitungskopf 4 mit einer zusätzlichen Einheit zur Bearbeitung des Werkstücks 2 bzw. des Rahmens bei dem vorliegenden Ausführungsbeispiel. Im vorliegenden Beispiel ist diese Einheit in Form eines Vorschubschraubers 22 zum Herstellen einer Kämpferverschraubung ausgebildet. Die zusätzliche Einheit kann beispielsweise auch als Bohrkopf und/oder Schlitzfräse und/oder Eckenputzvorrichtung und/oder Anschlag 25 und/oder Spannbackenvorrichtung 26 und/oder Spannrollenvorrichtung 27 und/oder Positioniergreifer ausgebildet sein. Im vorliegenden Fall kann mit dem Vorschubschrauber 22 ein Kämpfer 42 mit dem Profilteil B verbunden werden. Der Vorschubschrauber 22 ist direkt an dem Bearbeitungskopf 4 und separat zu dem Werkzeughalter 36 angeordnet.

In der Figur 15 ist ein Werkstück 2 in Form eines 3-Fach-Fensterrahmens schematisch dargestellt, in welchem Ecklagerbohrungen 47 und Scherenlagerbohrungen 48 durch die Bearbeitungseinheiten 7, 37 eingebracht worden sind. Zudem können auch nicht dargestellte Entwässerungs-, Entlüftungs- oder Ventilationsschlitze in den Rahmen eingebracht werden. Gleichzeitig ist es möglich, mit den bereits erwähnten, an den Bearbeitungsköpfen 4, 5 zusätzlich vorgesehenen Einheiten zunächst Bohrungen und dann Befestigungsmittel für Kämpferverschraubungen 49 einzubringen.

Dazu werden die Kämpfer 42 zunächst in das Werkstück 2 zwischen die Profilstäbe B und D eingesetzt. Dies kann vorzugsweise bereits vor dem Fügen in der Fügemaschine 16 bzw. Schweißmaschine erfolgen. An der Vorrichtung 1, vorzugsweise an wenigstens einem Bearbeitungskopf 4, 5 ist ein Positioniermittel, beispielsweise ein Positioniergreifer vorgesehen, der den jeweiligen Kämpfer insbesondere in Längsrichtung der Profilstäbe B, D, hier in der Transportrichtung 20 ausrichtet. Danach wird seitlich an jedem Profilstab B, D durch eine zusätzliche Einheit der Bearbeitungsköpfe 4, 5 eine Kämpferverschraubungsbohrung gesetzt, in die dann durch den Vorschubschrauber 22 ein Befestigungsmittel zur Herstellung der Kämpferverschraubung 49 getrieben wird. Diese Bearbeitungsschritte können nunmehr in der Vorrichtung 1 in einem Durchlauf erfolgen, so dass etwaige manuelle Nachbearbeitungsschritte entfallen. In einem Durchlauf bedeutet, dass alle Bearbeitungsschritte erfolgen, bevor das Werkstück zur Nachbearbeitungsmaschine 17 weitergefördert wird.

Bei der oben beschriebenen Ausführungsform ist es möglich, dass Relativbewegung zwischen Werkstück 2 und Bearbeitungskopf 4, 5 durch Bewegung des Bearbeitungskopfes 4, 5 oder aber durch Bewegung des Werkstücks 2 in Verfahrrichtung 6 zustande kommt. Die oben beschriebene Vorrichtung 1 wäre ebenso mit einer manuellen Werkstückeingabe denkbar, ohne dass die Werkstückauflagen 3, 33 als Transportvorrichtungen ausgebildet sein müssen.

### Bezugszeichenliste

- 1: Vorrichtung
- 2: Werkstück
- 3: Werkstückauflage
- 4: Bearbeitungskopf
- 5: Bearbeitungskopf
- 6: Verfahrrichtung
- 7: Bearbeitungseinheit
- 8: Bearbeitungswerkzeug
- 9: Positionierebene
- 10: Drehachse
- 11: Drehachse
- 12: Servoantrieb
- 14: Bearbeitungsstelle
- 15: Werkstückauflageebene
- 16: Fügemaschine
- 17: Nachbearbeitungsmaschine
- 18: Bearbeitungswerkzeug
- 19: Spannharken
- 20: Transportrichtung
- 21: Kühlstation
- 22: Vorschubschrauber
- 25: Anschlag
- 26: Spannbackenvorrichtung
- 27: Spannrollenvorrichtung
- 28: Schweißvorrichtung
- 29: Gegenanschlag
- 30: Profilbearbeitungsstrecke
- 31: Eckenputzvorrichtung
- 32: Maschinenträger
- 33: Werkstückauflage
- 34: Fahrschiene
- 35: Fahrschiene
- 36: Werkzeughalter
- 37: Bearbeitungseinheit
- 38: CNC-Achseneinheit
- 39: Positionierrichtung
- 40: Positionierrichtung
- 41: CNC-Achseneinheit
- 42: Kämpfer
- 43: Werkzeugantrieb
- 44: Drehachsenantrieb
- 45: Schwenkachsenantrieb
- 46: Werkzeughalter
- 47: Ecklagerbohrung
- 48: Scherenlagerbohrung
- 49: Kämpferverschraubung
- A: Profilstab (unten)
- B: Profilstab (links)
- C: Profilstab (oben)
- D: Profilstab (rechts)
- E: Profilstab (Kämpfer)
- α: Winkel
- X: Raumrichtung
- Y: Raumrichtung
- Z: Raumrichtung

## Patentansprüche

1. Vorrichtung (1), zur maschinellen Bearbeitung von langgestreckten Werkstücken (2), in Form von aus Profilstäben zusammengesetzten Fenster- oder Türrahmen bzw. -flügeln oder Blendrahmen, mit einem Bearbeitungskopf (4, 5), wobei das zu bearbeitende Werkstück (2) auf einer Werkstückauflage (3) anordenbar ist und das Werkstück (2) sowie der Bearbeitungskopf (4, 5) seitlich der Werkstückauflage (3) während der Werkstückbearbeitung in einer Verfahrrichtung (6) entlang der Werkstückauflage (3) relativ zueinander verfahrbar sind, wobei eine Bearbeitungseinheit (7, 37) mit wenigstens einem daran gehaltenen Bearbeitungswerkzeug (8, 18) zum Bearbeiten des Werkstücks (2) an dem Bearbeitungskopf (4, 5) angeordnet und in einer quer oder senkrecht zur Verfahrrichtung (6) verlaufenden Positionierebene (9) bewegbar ist und an dem Bearbeitungskopf (4, 5) wenigstens eine Vorrichtung zum Festlegen des Werkstücks (2) in einer oder zwei Raumrichtungen (X, Y, Z) in Form einer mitfahrenden Spannrollenvorrichtung (27) zum Abstützen des Werkstücks (2) während der Werkstückbearbeitung vorgesehen ist, **dadurch gekennzeichnet, dass** die Bearbeitungseinheit (7, 37) bezogen auf den Bearbeitungskopf (4, 5) mittels eines Antriebs um wenigstens eine quer oder senkrecht zur Verfahrrichtung (6) verlaufende Drehachse (10, 11) drehbar und/oder schwenkbar ist und dass die Bearbeitungseinheit (7, 37) in der Positionierebene (9) entlang der wenigstens einen Drehachse (10, 11) translatorisch verfahrbar ausgebildet ist.

2. Vorrichtung (1) nach Anspruch 1, **dadurch gekennzeichnet, dass** die Bearbeitungseinheit (7, 37) bezogen auf den Bearbeitungskopf (4, 5) drehbar um wenigstens zwei quer oder senkrecht zur Verfahrrichtung (6) und quer oder senkrecht zueinander verlaufende Drehachsen (10, 11) ausgebildet ist.

3. Vorrichtung (1) nach Anspruch 2, **dadurch gekennzeichnet, dass** die Bearbeitungseinheit (7, 37) in der Positionierebene (9) entlang beider Drehachsen (10, 11) translatorisch verfahrbar ausgebildet ist.

4. Vorrichtung (1) nach einem der vorhergehenden Ansprüche, **dadurch gekennzeichnet, dass** wenigstens ein positionsgeregelter Stellantrieb, insbesondere ein Servoantrieb (12) zum Drehen der Bearbeitungseinheit (7, 37) um die wenigstens eine Drehachse (10, 11) und/oder zum Verschieben der Bearbeitungseinheit (7, 37) entlang wenigstens einer der Drehachsen (10, 11) vorgesehen ist.

5. Vorrichtung (1) nach einem der vorhergehenden Ansprüche, **dadurch gekennzeichnet, dass** die wenigstens eine Drehachse (10) etwa parallel zu einer Werkstückauflageebene (15) der Werkstückauflage (3) ausgerichtet ist.

6. Vorrichtung (1) nach einem der Ansprüche 1 bis 4, **dadurch gekennzeichnet, dass** die wenigstens eine Drehachse (11) etwa senkrecht zu einer Werkstückauflageebene (15) der Werkstückauflage (3) ausgerichtet ist.

7. Vorrichtung (1) nach einem der vorhergehenden Ansprüche, **dadurch gekennzeichnet, dass** die Bearbeitungseinheit (7, 37) unter einem von einer Werkstückauflageebene (15) der Werkstückauflage (3) aufgespannten Bearbeitungswinkel (0) von etwa 10° bis etwa 70° und/oder, vorzugsweise 0° bis etwa 90° ausrichtbar, insbesondere unter einem beliebigen Winkel zwischen 0° bis 360° ausrichtbar ist.

8. Vorrichtung nach Anspruch 7 **dadurch gekennzeichnet, dass** die Bearbeitungseinheit (7, 37) zusätzlich um eine als Hochachse ausgebildete Drehachse (11) drehbar ist.

9. Vorrichtung (1) nach einem der vorhergehenden Ansprüche, **dadurch gekennzeichnet, dass** die Bearbeitungseinheit (7, 37) wenigstens zwei sich vorzugsweise diametral gegenüberliegende Bearbeitungswerkzeuge (8, 18) aufweist, die durch Drehen der Bearbeitungseinheit (7, 37) um die wenigstens eine Drehachse (10) wechselweise auf eine Bearbeitungsstelle (14) des Werkstückes (2) ausrichtbar sind.

10. Vorrichtung (1) nach einem der vorhergehenden Ansprüche, **dadurch gekennzeichnet, dass** der Bearbeitungskopf (4, 5) wenigstens eine weitere, vorzugsweise von der Bearbeitungseinheit (7, 37) unabhängige Einheit zum Bearbeiten und/oder Ausrichten und/oder Einspannen des Werkstücks (2) aufweist, wobei die Einheit insbesondere als Vorschubschrauber (22) und/oder Bohrkopf (23) und/oder Schlitzfräse (24) und/oder Eckenputzvorrichtung und/oder Anschlag (25) und/oder Spannbackenvorrichtung (26) und Spannrollenvorrichtung und/oder Positioniergreifer ausgebildet ist.

11. Profilbearbeitungsstrecke (30) zur maschinellen Bearbeitung von langgestreckten Werkstücken (2) in Form von Profilstäben oder aus Profilstäben zusammengesetzten Fenster- oder Türrahmen bzw. -Flügeln oder Blendrahmen, **dadurch gekennzeichnet, dass** die Profilbearbeitungsstrecke (30) eine Vorrichtung (1) nach einem der vorhergehenden Ansprüche aufweist, wobei vorgesehen ist, dass die Vorrichtung (1) als eine Kühlstation (21) vorgesehen ist, die einer Schweißvorrichtung (28) zur Herstellung des Werkstücks (2) nachgelagert und/oder einer Nachbearbeitungsvorrichtung, insbesondere einer Eckenputzvorrichtung (31) vorgelagert ist.

12. Verfahren zur Bearbeitung von langgestreckten Werkstücken (2), insbesondere von Profilstäben oder aus Profilstäben zusammengesetzten Fenster- oder Türrahmen bzw. -flügeln oder Blendrahmen, **dadurch gekennzeichnet, dass** die Bearbeitung mit einer Vorrichtung (1) nach einem der Ansprüche 1 bis 10 insbesondere mittels einer Profilbearbeitungsstrecke (30) nach Anspruch 11, erfolgt, wobei sowohl ein Befestigen eines zusätzlichen Werkstückelementes, insbesondere eines Kämpfers (42), als auch sein maschinelles Bearbeiten vorzugsweise in einem Durchlauf erfolgen.

13. Verfahren nach Anspruch 12, **dadurch gekennzeichnet, dass** das zusätzliche Werkstückelement vor dem Befestigen an dem Werkstück (2) an diesem ausgerichtet wird, wobei vorzugsweise nach dem Ausrichten zunächst eine maschinelle Bearbeitung einer Befestigungsstelle durchgeführt wird, insbesondere das Setzen einer Bohrung für Kämpferverschraubung (49), und dann ein Befestigungsmittel zur Herstellung der Kämpferverschraubung (49) in die Bohrung getrieben wird.

## Claims

1. Device (1) for machining elongate workpieces (2), in the form of window or door frames or sashes/leaves or blind frames composed of profile bars, having a machining head (4, 5), wherein the workpiece (2) to be machined can be arranged on a workpiece support (3), and the workpiece (2) and the machining head (4, 5) to the side of the workpiece support (3) are movable relative to one another during the workpiece machining operation in a movement direction (6) along the workpiece support (3), wherein a machining unit (7, 37) having at least one machining tool (8, 18) held thereon for machining the workpiece (2) is arranged on the machining head (4, 5) and is movable in a positioning plane (9) running transversely or perpendicularly to the movement direction (6), and at least one device for fixing the workpiece (2) in one or two spatial directions (X, Y, Z) in the form of a concomitantly travelling clamping roller device (27) for supporting the workpiece (2) during the workpiece machining operation is provided on the machining head (4, 5), **characterized in that** the machining unit (7, 37) is rotatable and/or pivotable, with respect to the machining head (4, 5), about at least one axis of rotation (10, 11) running transversely or perpendicularly to the movement direction (6) by means of a drive, and **in that** the machining unit (7, 37) is designed to be translationally movable in the positioning plane (9) along the at least one axis of rotation (10, 11).

2. Device (1) according to Claim 1, **characterized in that** the machining unit (7, 37) is designed to be rotatable with respect to the machining head (4, 5) about at least two axes of rotation (10, 11) running transversely or perpendicularly to the movement direction (6) and transversely or perpendicularly to one another.

3. Device (1) according to Claim 2, **characterized in that** the machining unit (7, 37) is designed to be translationally movable in the positioning plane (9) along both axes of rotation (10, 11).

4. Device (1) according to one of the preceding claims, **characterized in that** at least one position-controlled actuating drive, in particular a servo drive (12), is provided for rotating the machining unit (7, 37) about the at least one axis of rotation (10, 11) and/or for displacing the machining unit (7, 37) along at least one of the axes of rotation (10, 11).

5. Device (1) according to one of the preceding claims, **characterized in that** the at least one axis of rotation (10) is oriented approximately parallel to a workpiece support plane (15) of the workpiece support (3).

6. Device (1) according to one of Claims 1 to 4, **characterized in that** the at least one axis of rotation (11) is oriented approximately perpendicularly to a workpiece support plane (15) of the workpiece support (3).

7. Device (1) according to one of the preceding claims, **characterized in that** the machining unit (7, 37) can be oriented at a machining angle (0), defined by a workpiece support plane (15) of the workpiece support (3), of approximately 10° to approximately 70° and/or preferably 0° to approximately 90°, in particular can be oriented at any desired angle between 0° to 360°.

8. Device according to Claim 7, **characterized in that** the machining unit (7, 37) is additionally rotatable about an axis of rotation (11) formed as a vertical axis.

9. Device (1) according to one of the preceding claims, **characterized in that** the machining unit (7, 37) has at least two preferably diametrically opposite machining tools (8, 18) which, by rotating the machining unit (7, 37) about the at least one axis of rotation (10), can be alternately oriented towards a machining point (14) of the workpiece (2).

10. Device (1) according to one of the preceding claims, **characterized in that** the machining head (4, 5) has at least one further unit, which is preferably independent of the machining unit (7, 37), for machining and/or orienting and/or clamping in the workpiece (2), wherein the unit particularly takes the form of a feed screwdriver (22) and/or a drilling head (23) and/or a slot cutter (24) and/or a corner cleaning device and/or a stop (25) and/or a clamping jaw device (26) and a clamping roller device and/or a positioning gripper.

11. Profile machining line (30) for machining elongate workpieces (2) in the form of profile bars or of window or door frames or sashes/leaves or blind frames composed of profile bars, **characterized in that** the profile machining line (30) has a device (1) according to one of the preceding claims, wherein there is provision that the device (1) is provided as a cooling station (21) which is mounted downstream of a welding device (28) for producing the workpiece (2) and/or is mounted upstream of a finishing device, in particular a corner cleaning device (31).

12. Method for machining elongate workpieces (2), in particular profile bars or window or door frames or sashes/leaves or blind frames composed of profile bars, **characterized in that** the machining operation takes place with a device (1) according to one of Claims 1 to 10, in particular by means of a profile machining line (30) according to Claim 11, wherein both a fastening of an additional workpiece element, in particular of a crossbar (42), and its machining preferably take place in one pass.

13. Method according to Claim 12, **characterized in that** the additional workpiece element, prior to being fastened to the workpiece (2), is oriented on the latter, wherein preferably, after being oriented, first of all a machining of a fastening point is carried out, in particular the drilling of a hole for a crossbar screw connection (49), and then a fastening means for producing the crossbar screw connection (49) is driven into the hole.

## Revendications

1. Dispositif (1), pour l'usinage mécanique de pièces allongées (2), sous forme de cadres ou de battants de fenêtres ou de portes ou de cadres dormants composés de barres profilées, comprenant une tête d'usinage (4, 5), la pièce à usiner (2) pouvant être agencée sur un support de pièce (3) et la pièce (2) ainsi que la tête d'usinage (4, 5) pouvant être déplacées l'une par rapport à l'autre sur le côté du support de pièce (3) pendant l'usinage de la pièce dans une direction de déplacement (6) le long du support de pièce (3), une unité d'usinage (7, 37) comprenant au moins un outil d'usinage (8, 18) maintenu sur celle-ci pour l'usinage de la pièce (2) étant agencée sur la tête d'usinage (4, 5) et pouvant être déplacée dans un plan de positionnement (9) s'étendant transversalement ou perpendiculairement à la direction de déplacement (6), et au moins un dispositif pour fixer la pièce (2) dans une ou deux directions de l'espace (X, Y, Z) sous la forme d'un dispositif à galets tendeurs entraîné (27) pour soutenir la pièce (2) pendant l'usinage de la pièce étant prévu sur la tête d'usinage (4, 5), **caractérisé en ce que** l'unité d'usinage (7, 37) peut être tournée et/ou pivotée par rapport à la tête d'usinage (4, 5) autour d'au moins un axe de rotation (10, 11) s'étendant transversalement ou perpendiculairement à la direction de déplacement (6) au moyen d'un entraînement, et **en ce que** l'unité d'usinage (7, 37) est configurée de manière à pouvoir se déplacer en translation dans le plan de positionnement (9) le long de l'au moins un axe de rotation (10, 11).

2. Dispositif (1) selon la revendication 1, **caractérisé en ce que** l'unité d'usinage (7, 37) est configurée de manière à pouvoir tourner par rapport à la tête d'usinage (4, 5) autour d'au moins deux axes de rotation (10, 11) s'étendant transversalement ou perpendiculairement à la direction de déplacement (6) et transversalement ou perpendiculairement entre eux.

3. Dispositif (1) selon la revendication 2, **caractérisé en ce que** l'unité d'usinage (7, 37) est configurée de manière à pouvoir se déplacer en translation dans le plan de positionnement (9) le long des deux axes de rotation (10, 11).

4. Dispositif (1) selon l'une quelconque des revendications précédentes, **caractérisé en ce qu'**au moins un actionneur à position régulée, notamment un servo-entraînement (12), est prévu pour faire tourner l'unité d'usinage (7, 37) autour de l'au moins un axe de rotation (10, 11) et/ou pour décaler l'unité d'usinage (7, 37) le long d'au moins un des axes de rotation (10, 11).

5. Dispositif (1) selon l'une quelconque des revendications précédentes, **caractérisé en ce que** l'au moins un axe de rotation (10) est orienté approximativement parallèlement à un plan de support de pièce (15) du support de pièce (3).

6. Dispositif (1) selon l'une quelconque des revendications 1 à 4, **caractérisé en ce que** l'au moins un axe de rotation (11) est orienté approximativement perpendiculairement à un plan de support de pièce (15) du support de pièce (3).

7. Dispositif (1) selon l'une quelconque des revendications précédentes, **caractérisé en ce que** l'unité d'usinage (7, 37) peut être orientée selon un angle d'usinage (0) d'environ 10° à environ 70° et/ou, de préférence, de 0° à environ 90°, défini par un plan de support de pièce (15) du support de pièce (3), notamment peut être orientée selon un angle quelconque compris entre 0° et 360°.

8. Dispositif selon la revendication 7, **caractérisé en ce que** l'unité d'usinage (7, 37) peut en outre tourner autour d'un axe de rotation (11) configuré en tant qu'axe vertical.

9. Dispositif (1) selon l'une quelconque des revendications précédentes, **caractérisé en ce que** l'unité d'usinage (7, 37) présente au moins deux outils d'usinage (8, 18) de préférence diamétralement opposés, qui peuvent être orientés alternativement sur un point d'usinage (14) de la pièce (2) par rotation de l'unité d'usinage (7, 37) autour de l'au moins un axe de rotation (10).

10. Dispositif (1) selon l'une quelconque des revendications précédentes, **caractérisé en ce que** la tête d'usinage (4, 5) présente au moins une autre unité, de préférence indépendante de l'unité d'usinage (7, 37), pour l'usinage et/ou l'orientation et/ou le serrage de la pièce (2), l'unité étant configurée notamment sous forme de visseuse à avance (22) et/ou tête de forage (23) et/ou chanfrein à fente (24) et/ou dispositif de nettoyage des coins et/ou butée (25) et/ou dispositif à mâchoires de serrage (26) et dispositif à galets tendeurs et/ou pince de positionnement.

11. Ligne d'usinage de profilés (30) pour l'usinage mécanique de pièces allongées (2) sous forme de barres profilées ou de cadres ou de battants de fenêtres ou de portes ou de cadres dormants composés de barres profilées, **caractérisée en ce que** la ligne d'usinage de profilés (30) présente un dispositif (1) selon l'une quelconque des revendications précédentes, il étant prévu que le dispositif (1) est prévu sous la forme d'une station de refroidissement (21), qui est placée en aval d'un dispositif de soudage (28) pour la fabrication de la pièce (2) et/ou en amont d'un dispositif d'usinage secondaire, notamment d'un dispositif de nettoyage des coins (31).

12. Procédé d'usinage de pièces allongées (2), notamment de barres profilées ou de cadres ou de battants de fenêtres ou de portes ou de cadres dormants composés de barres profilées, **caractérisé en ce que** l'usinage est effectué avec un dispositif (1) selon l'une quelconque des revendications 1 à 10, notamment au moyen d'une ligne d'usinage de profilés (30) selon la revendication 11, aussi bien une fixation d'un élément de pièce supplémentaire, notamment d'une traverse (42), que son usinage mécanique s'effectuant de préférence en un seul passage.

13. Procédé selon la revendication 12, **caractérisé en ce que** l'élément de pièce supplémentaire est aligné avec la pièce (2) avant d'être fixé à celle-ci, un usinage mécanique d'un point de fixation étant de préférence tout d'abord réalisé après l'alignement, notamment la mise en place d'un alésage pour le raccord vissé de la traverse (49), puis un moyen de fixation pour réaliser le raccord vissé de la traverse (49) étant enfoncé dans l'alésage.
